# EUROPÄISCHE PATENTSCHRIFT

(11) **EP 1 952 973 B1**
(45) Veröffentlichungstag und Bekanntmachung des Hinweises auf die Patenterteilung: **12.08.2009**
(21) Anmeldenummer: 08405003.8
(22) Anmeldetag: 07.01.2008
(51) Int. Cl.: B29C 63/26, B32B 17/02, B32B 17/04, B65D 90/04, C08J 5/08

(54) **Glasfasergewebe und damit hergestellter doppelwandiger Tank**
Glass fibrous cloth and double-walled tank produced using it
Tissu en fibres de verre et réservoir à double paroi ainsi formé

(30) Priorität: 02.02.2007 CH 1772007
(43) Veröffentlichungstag der Anmeldung: 06.08.2008
(73) Patentinhaber: OnO Waterprotection GmbH, 6020 Innsbruck (AT)
(72) Erfinder: Werner Bachmann, 6275 Ballwil (CH)
(74) Vertreter: Dr. Graf & Partner

(56) Entgegenhaltungen:
- EP-A1- 0 470 321
- DE-A1- 19 932 274
- DATABASE WPI Week 199011 Derwent Publications Ltd., London, GB; AN 1990-079265 XP002446034 & JP 02 032160 A (NIPPON ELECTRIC GLASS CO) 1. Februar 1990 (1990-02-01)

## Beschreibung

### Gebiet der Erfindung

Die vorliegende Erfindung betrifft ein mehrschichtiges Glasfasergewebe mit wenigstens einer ersten und einer zweiten Schicht, welche übereinander angeordnet und miteinander verbunden sind, sowie ein mit dem Glasfasergewebe hergestellter doppelwandiger Tank.

### Stand der Technik

Die deutsche Offenlegungsschrift DE-OS-2658088 offenbart einen Tank zur unterirdischen Lagerung von Flüssigkeiten, wie Heizöl oder Diesel. Der Tank besitzt einen Behälter aus Stahl und einen diesen umgebenden Isoliermantel. Der Stahltank ist von einer verrottungsfesten, gleichmässig gerasterten Distanzschicht umgeben. Auf der Distanzschicht ist eine gas- bzw. flüssigkeitsdichte Umhüllung aus einem faserverstärktem Kunststoff aufgebracht. Die Distanzschicht besteht aus einem gleichmässig genoppten Schichtkörper. Der Schichtkörper kann aus Streckmetall, Papier oder einem Geflecht gebildet sein.

Als Verstärkungsmaterial sind in Tankbeschichtungen üblicherweise Glasmatten eingearbeitet. Diese tragen für eine wesentliche Verstärkung der Beschichtungen. Nachteilig allerdings ist, dass die Tankbeschichtungen im Allgemeinen wenig nachgiebig sind, sodass die Tankbeschichtung insbesondere bei grossen Tanks reissen. Kritische Stellen befinden sich im Übergangsbereich zwischen Boden und Wänden, wo die grösste Druckbeanspruchung wirkt.

Die EP-A-0 470 321 offenbart einen Tank mit einer Aussenwandung und einer Innenwandung, welche aus einem Laminat, bestehend aus einer Noppenfolie und einer Kunststoffschicht gebildet ist. Die Ränder der Kunststoffschicht sind mit der Aussenwandung verbunden, um zwischen der Innenwandung und der Aussenwandung ein auf Leck überprüfbarer Raum zu bilden. Die Kunststoffschicht besitzt als Armierung ein mehrschichtiges Glasfasergewebe, dessen übereinander angeordnete Schichten durch Schuss- und/oder Kettfäden, die von einer Schicht in eine andere Schicht übergehen, miteinander verbunden sind.

Die mit dem vorerwähnten mehrschichtigen Glasfasergewebe ausgestattete Innenwandung hat den Vorteil, dass sie besonders unnachgiebig ist (grosses E-modul). Diese Steifheit hat bei der Auskleidung von grossvolumigen Tanks allerdings den Nachteil, dass die Innenwandung bersten kann. Beim Befüllen eines grossvolumigen Tanks geben die Aussenwandungen gerne etwas nach und somit wirkt die gesamte Druckbelastung auf die Innenwandung. Weil die Innenwandung ein sehr grosses E-Modul besitzt, führt dies bei Überbeanspruchung zur Rissbildung. Die Folge davon ist eine Undichtigkeit der innenwandung. Ein anderes Problem des bekannten mehrschichtigen Gewebes ist, dass dieses viel Kunstharz absorbiert. Nachdem die Rohstoffpreise in den vergangenen Jahren stark angestiegen sind, führt dies zu einer Verteuerung der Herstellungskosten.

### Aufgabe der Erfindung

Ausgehend von diesem Stand der Technik stellt sich die Erfindung zur Aufgabe, ein Glasfasergewebe bereitzustellen, welches die eingangs erwähnten Probleme vermeiden hilft. Insbesondere ist es ein Ziel, ein Glasfasergewebe vorzuschlagen, welches auch beim Einsatz bei grossvolumigen Tanks nicht reisst. Ein weiteres Ziel ist es, ein Glasfasergewebe bereitzustellen, welches nur mit einer geringen Menge Kunstharz beschichtet werden muss.

### Beschreibung

Erfindungsgemäss wird die Aufgabe dadurch gelöst, dass die Fasern der ersten Schicht mit einer Schlichte behandelt sind, und die Fasern der zweiten Schicht roh sind. Dies hat den Vorteil, dass bei der Einarbeitung des Glasfasergewebes in ein Laminat an gegenüberliegenden Seiten unterschiedliche Hafteigenschaften erreicht werden können. Vorzugsweise sind die Fasern der einen Schicht mit einer Silan- Schlichte überzogen.

Gemäss einer besonders vorteilhaften Ausführungsform ist das Glasfasergewebe mindestens der einen Schicht als Glasseidengewebe ausgebildet. Die Verwendung eines Glasseidengewebes hat den Vorteil, dass im Vergleich zu einer Glasmatte das Kunstharz schneller aufgenommen und besser verteilt wird. Dabei ist die Gefahr des "Überharzens" geringer. Eine Folge davon ist, dass deutlich weniger Kunstharz benötigt wird als bei bekannten Glasfasergeweben. Ein weiterer Vorteil ist, dass beim Auslegen keine störenden Glasteile abgespalten werden, weil Rovings (Faserstränge) mit unendlich langen Filamenten verwendet sind. Die Filamente des Glasseidengewebes liegen vorzugsweise unverzwirnt vor (sog. glatte Filamentgarne). Die webetechnische Verbindung verbessert die Schälfestigkeit (kein Abschären der einzelnen Gewebelagen) sowie das Bruchverhalten des Laminats. Vorzugsweise sind alle Schichten des Glasfasergewebes aus Glasseide hergestellt.

Vorteilhaft ist der Anteil an Kett- und Schussfäden mindestens einer Schicht ungefähr gleich gross. Dies hat den Vorteil, dass die Zugfestigkeit in zueinander orthogonalen Richtungen ungefähr gleich gross sein kann.

Zweckmässigerweise haben die Kett- und Schussfäden ungefähr die gleiche Feinheit. Dies hat den Vorteil, dass das Laminat in allen Richtungen eine hohe Zugfestigkeit besitzt. Vorteilhaft sind die wenigstens 2 Schichten des Glasfasergewebes in bestimmten Abständen miteinander verbunden. Obwohl diese Verbindung grundsätzlich mit Schuss- und/oder Kettfäden erfolgen könnte, wird dafür vorzugsweise ein separater Faden oder ein Gam verwendet, um die wenigsten zwei Schichten des Glasfasergewebes in bestimmten Abständen miteinander festzuhalten. Vorzugsweise beträgt das Flächengewicht des mehrschichtigen Gewebes zwischen 250 g/m2 und 400 g/m2, besonders bevorzugt zwischen 280 g/m2 und 330 g/m2 und ganz besonders bevorzugt ca. 300 g/m2.

Gegenstand der vorliegenden Erfindung ist auch ein doppelwandiger Tank, bei welchem die Innenwand mit einem erfindungsgemässen Glasfasergewebe ausgestattet ist. Das erfindungsgemässe Glasfasergewebe ist dabei so eingesetzt, dass die erste mit der Schlichte behandelte Schicht nach innen (raumseitig) und die unbehandelte (rohe) Fasern enthaltende zweite Schicht zur Aussenwandung hin orientiert sind. Dies hat den Vorteil, dass nur die zweite Schicht einen festen Verbund mit der Aussenwandung bildet. Die erste Schicht hingegen kann sich bei einem Nachgeben der Aussenwand von der zweiten Schicht lösen und so ein Reissen der Innenwandung verhindern. Es konnte festgestellt werden, dass durch die Schlichtebehandlung die Fasern in der ersten Schicht beweglich sind.

Vorteilhaft ist die Innenwand ein Laminat aus wenigstens einer Distanzhaltefolie, dem Glasfasergewebe und einer Kunststoffschicht, wobei die Distanzhaltefolie an der Aussenwand anliegt. Dies hat den Vorteil, dass zwischen der Aussenwand und der Innenwand ein auf Leck überprüfbarer Raum gebildet ist, wenn die Ränder der Innwand mit der Aussenwand luftdicht verbunden bleiben.

Es ist denkbar, als Distanzhaltefolie eine speziell imprägnierte, mit Noppen besetzte Karton- oder Metallfolie einzusetzen. Bevorzugt wird jedoch eine Metallfolie eingesetzt, weil diese einfacher zu applizieren und auch grössere Druckbelastungen aushalten kann. Vorzugsweise ist die Kunststoffbeschichtung aus einem Epoxy-, Polyester-, Polyurethan-, Novolack (ein epoxyd-basierendes Vinylesterharz) oder einem Polycarbonatharz hergestellt.

Vorteilhaft sind die Noppen als Pyramiden- oder Kegelstumpf ausgebildet. Eine solche Folie hat den Vorteil, dass diese eine höhere Druckfestigkeit besitzt als konventionelle Metallfolien. Auch kann die erfindungsgemässe Folie besser als konventionelle Folien verlegt werden, weil sie keine Tendenz hat, sich schräg abzurollen.

Gemäss einer bevorzugten Ausführungsform sind die einzelnen Noppen jeweils als regelmässige, vorzugsweise quadratische Pyramidenstümpfe mit einer Basisfläche und einer Deckfläche ausgebildet. Diese Geometrie hat den Vorteil, dass sie eine hohe Druckfestigkeit garantiert. Es hat sich als vorteilhaft herausgestellt, wenn die Kantenlänge der Basisfläche mehr als doppelt so lang wie die Kantenlänge der Deckfläche ist. Vorzugsweise ist die Kantenlänge der Basisfläche ungefähr zwischen 220% und 380% länger als die Kantenlänge der Deckfläche.

Vorteilhaft sind die Kegelstümpfe jeweils in Reihe hintereinander angeordnet, sodass ein gitterartiges, orthogonales Muster gebildet ist. Zweckmässigerweise haben zwei benachbarte Kegelstümpfe jeweils eine Kante der Basisfläche gemeinsam. Auf diese Weise ist eine dichte Aneinanderreihung von Pyramidenstümpfen möglich. Obwohl quadratische Pyramidenstümpfe bevorzugt sind, können die Noppen auch als regelmässige hexagonale oder octagonale Pyramidenstümpfe ausgebildet sein. Daneben ist auch möglich, die Noppen als Wabenmuster anzuordnen. Zweckmässigerweise sind die Noppen jeweils gleich gross.

Vorteilhaft ist die Metallfolie aus einer Aluminiumfolie mit einer Stärke zwischen 0.15 und 0.25 mm, vorzugsweise zwischen 0.18 und 0.22 Millimeter hergestellt ist. Vorzugsweise beträgt die Kantenlänge der Basisfläche zwischen 3 und 10 mm, vorzugsweise zwischen 4.5 und 8.5, und ganz besonders bevorzugt zwischen 5.5 und 7.5 mm. Solche Pyramidenstümpfe lassen sich gut herstellen und besitzen eine hohe Drucksteifigkeit. Vorteilhaft beträgt die Höhe der Noppen zwischen 0.6 und 1.5 mm, vorzugsweise zwischen 0.8 und 1.2 mm. Es hat sich als vorteilhaft herausgestellt, wenn die Metallfolie ein spezifisches Gewicht zwischen 0.62 und 0.78 Kg/m2, vorzugsweise zwischen 0.67 und 0.73 Kg/m2 besitzt. Bei einem solchen spezifischen Gewicht kann eine Metallfolie mit geringem Gewicht und hoher Drucksteifigkeit hergestellt werden.

Die Erfindung wird nachfolgend unter Bezugnahme auf die Figuren anhand eines Anwendungsbeispiels näher im Detail beschrieben. Es zeigt:
- Fig. 1: Eine Draufsicht auf eine Metallfolie;
- Fig. 2: Einen Schnitt entlang der Linie 2-2; und
- Fig. 3: Ausschnittsweise der Aufbau eines doppelwandigen Tanks, dessen Innenwand ein Laminat ist mit einer Metallfolie, mindestens einem erfindungemässen Glasfasergewebe und einer Kunststoffschicht.

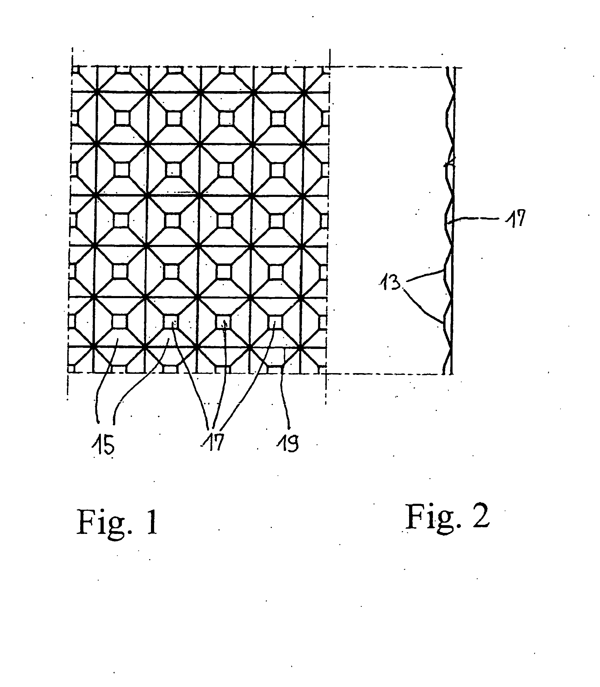

Die Figuren 1 bis 2 zeigen eine Metallfolie 11 mit in Abstand voneinander angeordneten Noppen 13. Die Noppen 13 sind als regelmässige Pyramidenstümpfe ausgebildet mit einer offenen Basisfläche 15 und einer geschlossenen Deckfläche 17. Die Pyramidenstümpfe sind dicht nebeneinander angeordnet, sodass eine Gitterstruktur gebildet ist. Benachbarte Pyramidenstümpfe haben dabei jeweils eine gemeinsame Basiskante 19. Durch die dichte Anordnung der Noppen 13 und deren geometrische Ausbildung als Pyramidenstümpfe ist eine höhere Druckfestigkeit als bei konventionellen Metallfolien erreicht.

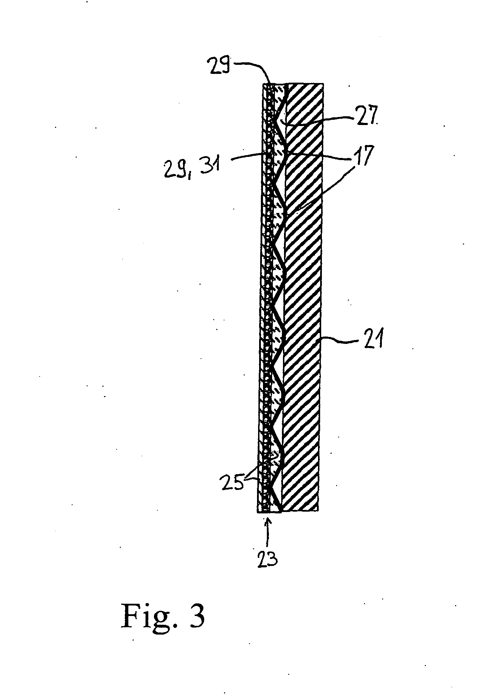

Figur 3 zeigt ausschnittsweise und im Schnitt den Aufbau eines doppelwandigen Behältnisses mit der Metallfolie 11. Das doppelwandige Behältnis besitzt eine Aussenwand 21 und eine Innenwand 23. Die Aussenwand 21 kann eine Stahlwand oder auch Mauerwerk sein. Die Innenwand 23 ist durch eine Metallfolie 11 und eine Kunststoffbeschichtung 25 gebildet. Die Metallfolie 11 liegt mit den Deckflächen 17 an der Aussenwand 21 an, sodass zwischen der Aussenwand 21 und der Metallfolie 11 ein Zwischenraum 27 gebildet ist. Der Zwischenraum 27 kann mittels Lecksuchgräten in dem Fachmann bekannter Weise auf allfällige Undichtigkeiten geprüft werden.

In die Kunststoffschicht 25 ist ein erfindungsgemässes ein-, zwei- oder mehrlagiges Glasfasergewebe 29 eingearbeitet. Das Glasfasergewebe 29 verleiht der Innenwand eine sehr hohe Festigkeit. Als Glasfasergewebe 29 ist vorzugsweise ein Glasseidengewebe verwendet. Dieses hat im Vergleich zu einer konventionellen Glasmatte den überraschenden Vorteil, dass ein Glasseidengewebe mit einem geringeren Flächengewicht als eine Glasmatte im Laminat eine höhere Reissfestigkeit besitzt als eine Glasmatte. Ein Glasseidengewebe hat darüber hinaus den Vorteil, dass für die Beschichtung weniger Kunstharz verbraucht wird. Als Kunststoffe können Epoxyharze, Polycarbonate, Polyesterharze, Novolack (ein epoxyd-basierendes Vinylesterharz) und ähnliche verwendet werden.

## Patentansprüche

1. Mehrschichtiges Glasfasergewebe mit wenigstens einer ersten und einer zweiten Schicht, welche übereinander angeordnet und miteinander verbunden sind,
**dadurch gekennzeichnet,**
**dass** die Fasern der ersten Schicht mit einer Schlichte behandelt, und die Fasern der zweiten Schicht roh sind.

2. Glasfasergewebe nach Anspruch 1, **dadurch gekennzeichnet, dass** das Glasfasergewebe mindestens der einen Schicht als Glasseidengewebe ausgebildet ist.

3. Glasfasergewebe nach Anspruch 1 oder 2, **dadurch gekennzeichnet, dass** der Anteil an Kett- und Schussfäden mindestens einer Schicht ungefähr gleich gross ist.

4. Glasfasergewebe nach Anspruch 3, **dadurch gekennzeichnet, dass** die Feinheit der Kett- und Schussfäden ungefähr gleich gross ist.

5. Glasfasergewebe nach einem der Ansprüche 1 bis 4, **dadurch gekennzeichnet, dass** die wenigstens 2 Schichten des Glasfasergewebes in bestimmten Abständen miteinander verbunden sind.

6. Glasfasergewebe nach einem der Ansprüche 1 bis 4, **dadurch gekennzeichnet, dass** die Schichten des Glasfasergewebes mittels eines Fadens miteinander verbunden sind.

7. Glasfasergewebe nach einem der Ansprüche 1 bis 6, **dadurch gekennzeichnet, dass** das Flächengewicht des mehrschichtigen Gewebes zwischen 250 g/m2 und 400 g/m2, ' vorzugsweise zwischen 280 g/m2 und 330 g/m2 und ganz besonders bevorzugt ca. 300 g/m2 beträgt.

8. Doppelwandiger Tank oder Behältnis, insbesondere für Flüssigkeiten, mit einer Aussenwand und einer zur Aussenwand beabstandeten Innenwand mit einem Glasfasergewebe gemäss einem der Ansprüche 1 bis 7.

9. Doppelwandiger Tank nach Anspruch 8, **dadurch gekennzeichnet, dass** die Innenwand ein Laminat aus wenigstens einer Distanzhaltefolie, dem Glasfasergewebe und einer Kunststoffschicht ist, wobei die Distanzhaltefolie an der Aussenwand anliegt.

10. Tank nach Anspruch 8, **dadurch gekennzeichnet, dass** als Distanzhaltefolie eine vorzugsweise speziell imprägnierte Kartonfolie oder eine Metallfolie eingesetzt ist.

11. Tank nach Anspruch 9 oder 10, **dadurch gekennzeichnet, dass** auf der Innenseite der Distanzhaltefolie eine Kunststoffbeschichtung aufgebracht ist.

12. Tank nach einem der Ansprüche 9 bis 11, **dadurch gekennzeichnet, dass** die Kunststoffbeschichtung aus einem Epoxy-, Polyester-, Polyurethan-, Novolack (ein epoxyd-basierendes Vinylesterharz) oder einem Polycarbonatharz hergestellt ist.

13. Tank nach einem der Ansprüche 9 bis 12, **dadurch gekennzeichnet, dass** die Distanzhaltefolie Noppen besitzt, welche als Pyramiden- oder Kegelstümpfe ausgebildet sind.

14. Tank nach Anspruch 13, **dadurch gekennzeichnet, dass** die einzelnen Noppen jeweils als regelmässige, vorzugsweise quadratische Pyramidenstümpfe mit jeweils einher Basisfläche und einer Deckfläche ausgebildet sind.

15. Tank nach Anspruch 14, **dadurch gekennzeichnet, dass** die Kantenlänge der Basisfläche mehr als doppelt so lang wie die Kantenlänge der Deckfläche ist.

16. Tank nach Anspruch 14 oder 15, **dadurch gekennzeichnet, dass** die Kantenlänge der Basisfläche ungefähr zwischen 220% und 380% länger als die Kantenlänge der Deckfläche ist.

17. Tank nach einem der Ansprüche 14 bis 16, **dadurch gekennzeichnet, dass** die Pyramidenstümpfe jeweils in Reihe hintereinander angeordnet sind, sodass ein gitterartiges, orthogonales Muster gebildet ist.

18. Tank nach einem der Ansprüche 14 bis 17, **dadurch gekennzeichnet, dass** zwei benachbarte Pyramidenstümpfe jeweils eine Kante der Basisfläche gemeinsam haben.

19. Tank nach einem der Ansprüche 14 bis 18, **dadurch gekennzeichnet, dass** die Noppen jeweils als regelmässiger hexagonaler Pyramidenstumpf ausgebildet sind.

20. Tank nach einem der Ansprüche 14 bis 19, **dadurch gekennzeichnet, dass** die Noppen als Wabenmuster angeordnet sind.

21. Tank nach einem der Ansprüche 13 bis 20, **dadurch gekennzeichnet, dass** die Noppen jeweils gleich gross sind.

22. Tank nach einem der Ansprüche 13 bis 20, **dadurch gekennzeichnet, dass** die genoppte Metallfolie aus einer Aluminiumfolie mit einer Stärke zwischen 0.15 und 0.25 mm, vorzugsweise zwischen 0.18 und 0.22 Millimeter hergestellt ist.

23. Tank nach einem der Ansprüche 13 bis 22, **dadurch gekennzeichnet, dass** die Kantenlänge der Basisfläche zwischen 3 und 10 mm, vorzugsweise zwischen 4.5 und 8.5, und ganz besonders bevorzugt zwischen 5.5 und 7.5 mm beträgt.

24. Tank nach einem der Ansprüche 13 bis 23, **dadurch gekennzeichnet, dass** die Höhe der Noppen zwischen 0.6 und 1.5 mm, vorzugsweise zwischen 0.8 und 1.2 mm beträgt.

25. Tank nach einem der Ansprüche 13 bis 24, **dadurch gekennzeichnet, dass** die Metallfolie ein spezifisches Gewicht zwischen 0.62 und 0.78 Kg/m2, vorzugsweise zwischen 0.67 und 0.73 Kg/m2 hat.

## Claims

1. A multi-layered glass fibre fabric with at least one first and a second layer, which are arranged above one another and are connected to one another,
**characterised in that**
the fibres of the first layer are treated with a size, and the fibres of the second layer are raw.

2. A glass fibre fabric according to claim 1, **characterised in that** the glass fibre fabric at least of the one layer is designed as a glass silk fabric.

3. A glass fibre fabric according to claim 1 or 2, **characterised in that** the share of warp threads and weft threads of at least one layer is roughly equally large.

4. A glass fibre fabric according to claim 3, **characterised in that** the fineness of the warp threads and weft threads is roughly equally large.

5. A glass fibre fabric according to one of the claims 1 to 4, **characterised in that** the at least 2 layers of the glass fibre fabric are connected to one another at certain distances.

6. A glass fibre fabric according to one of the claims 1 to 4, **characterised in that** the layers of the glass fibre fabric are connected to one another by way of a thread.

7. A glass fibre fabric according to one of the claims 1 to 6, **characterised in that** the surface weight of the multi-layered fabric is between 250 g/m² and 400 g/m², preferably between 280 g/m² and 330 g/m² and very particularly preferably approx. 300 g/m².

8. A double-walled tank or receptacle, in particular for fluids, with an outer wall and an inner wall with a glass fibre fabric according to one of the claims 1 to 7, said inner wall being distanced to the outer wall.

9. A double-walled tank according to claim 8, **characterised in that** the inner wall is a laminate of at least one spacer film, the glass fibre fabric and a plastic layer, wherein the spacer film bears on the outer wall.

10. A tank according to claim 8, **characterised in that** a preferably specially impregnated cardboard film or a metal film is inserted as a spacer film.

11. A tank according to claim 9 or 10, **characterised in that** a plastic coating is deposited on the inner side of the spacer film.

12. A tank according to one of the claims 9 to 11, **characterised in that** the plastic coating is manufactured of an epoxy resin, polyester resin, polyurethane resin, novolack (an epoxide-based vinyl-ester resin) or a polycarbonate resin.

13. A tank according to one of the claims 9 to 12, **characterised in that** the spacer film comprises burls which are designed as truncated pyramids or truncated cones.

14. A tank according to claim 13, **characterised in that** the individual burls in each case are designed as regular, preferably square truncated pyramids, in each case with a base surface and a cover surface.

15. A tank according to claim 14, **characterised in that** the edge length of the base surface is more than double the length of the edge length of the cover surface.

16. A tank according to claim 14 or 15, **characterised in that** the edge length of the base surface is roughly between 220% and 380% longer than the edge length of the cover surface.

17. A tank according to one of the claims 14 to 16, **characterised in that** the truncated pyramids are in each case arranged one after the other in a row, so that a grid-like orthogonal pattern is formed.

18. A tank according to one of the claims 14 to 17, **characterised in that** two adjacent truncated pyramids each have a common edge of the base surface.

19. A tank according to one of the claims 14 to 18, **characterised in that** the burls are designed in each case as a regular hexagonal truncated pyramid.

20. A tank according to one of the claims 14 to 19, **characterised in that** the burls are arranged as a honeycomb pattern.

21. A tank according to one of the claims 13 to 20, **characterised in that** the burls are equally large.

22. A tank according to one of the claims 13 to 20, **characterised in that** the burled metal film is manufactured of an aluminium film with a thickness between 0.15 and 0.25 mm, preferably between 0.18 and 0.22 millimetres.

23. A tank according to one of the claims 13 to 22, **characterised in that** the edge length of the base surface is between 3 mm and 10 mm, preferably between 4.5 and 8.5 mm, and very particularly preferably between 5.5 and 7.5 mm.

24. A tank according to one of the claims 13 to 23, **characterised in that** the height of the naps is between 0.6 and 1.5 mm, preferably between 0.8 and 1.2 mm.

25. A tank according to one of the claims 13 to 24, **characterised in that** the metal film has a specific weight between 0.62 and 0.78 kg/m², preferably between 0.67 and 0.73 kg/m².

## Revendications

1. Tissu en fibres de verre en plusieurs couches avec au moins une première et une seconde couche qui sont placées l'une au-dessus de l'autre et qui sont reliées l'une à l'autre,
**caractérisé en ce**
**que** les fibres de la première couche sont traitées avec un coulis et les fibres de la seconde couche sont brutes.

2. Tissu en fibres de verre selon la revendication 1, **caractérisé en ce que** le tissu en fibres de verre au moins de l'une des couches est configuré comme un tissu en soie de verre.

3. Tissu en fibres de verre selon la revendication 1 ou 2, **caractérisé en ce que** la proportion de fils de chaîne et de fils de trame d'au moins une couche est approximativement du même ordre de grandeur.

4. Tissu en fibres de verre selon la revendication 3, **caractérisé en ce que** la finesse des fils de chaîne et des fils de trame est approximativement du même ordre de grandeur.

5. Tissu en fibres de verre selon l'une des revendications 1 à 4, **caractérisé en ce que** les 2 couches du tissu en fibres de verre qui existent au moins sont reliées l'une à l'autre à certains intervalles.

6. Tissu en fibres de verre selon l'une des revendications 1 à 4, **caractérisé en ce que** les couches du tissu en fibres de verre sont reliées l'une à l'autre au moyen d'un fil.

7. Tissu en fibres de verre selon l'une des revendications 1 à 6, **caractérisé en ce que** le poids en surface du tissu en plusieurs couches est situé entre 250 g/m² et 400 g/m², de préférence entre 280 g/m2 et 330 g/m2 et de manière tout particulièrement préférée est d'approximativement 300 g/m².

8. Réservoir à double paroi ou récipient, en particulier pour liquides, avec une paroi extérieure et une paroi intérieure espacée de la paroi extérieure avec un tissu en fibres de verre selon l'une des revendications 1 à 7.

9. Réservoir à double paroi selon la revendication 8, **caractérisé en ce que** la paroi intérieure est un laminé d'au moins une feuille de maintien d'écartement, le tissu en fibres de verre et une couche synthétique, la feuille de maintien d'écartement reposant contre la paroi extérieure.

10. Réservoir selon la revendication 8, **caractérisé en ce qu'**une feuille de carton de préférence imprégnée spécialement ou une feuille de métal est mise en place comme feuille de maintien d'écartement.

11. Réservoir selon la revendication 9 ou 10, **caractérisé en ce qu'**une enduction synthétique est appliquée sur le côté intérieur de la feuille de maintien d'écartement.

12. Réservoir selon l'une des revendications 9 à 11, **caractérisé en ce que** l'enduction synthétique est fabriquée à partir d'une laque à base de résine époxy, de polyester, de polyuréthane ou d'une Novolack (une résine d'ester de vinyle à base de résine époxy) ou d'une résine de polycarbonate.

13. Réservoir selon l'une des revendications 9 à 12, **caractérisé en ce que** la feuille de maintien d'écartement a des nopes qui sont configurées comme des troncs de pyramide ou de cône.

14. Réservoir selon la revendication 13, **caractérisé en ce que** les différentes nopes sont configurées respectivement comme des troncs de pyramides réguliers, de préférence carrés, avec respectivement une surface de base et une surface de couverture.

15. Réservoir selon la revendication 14, **caractérisé en ce que** la longueur des arêtes de la surface de base a plus du double de longueur que la longueur des arêtes de la surface de couverture.

16. Réservoir selon la revendication 14 ou 15, **caractérisé en ce que** la longueur des arêtes de la surface de base est d'environ entre 220% et 380% plus longue que la longueur des arêtes de la surface de couverture.

17. Réservoir selon l'une des revendications 14 à 16, **caractérisé en ce que** les troncs de pyramide sont placés respectivement en rangée l'un derrière l'autre si bien qu'un motif orthogonal de type grille est formé.

18. Réservoir selon l'une des revendications 14 à 17, **caractérisé en ce que** deux troncs de pyramide voisins ont en commun respectivement une arête de la surface de base.

19. Réservoir selon l'une des revendications 14 à 18, **caractérisé en ce que** les nopes sont configurées respectivement comme un tronc de pyramide hexagonal régulier.

20. Réservoir selon l'une des revendications 14 à 19, **caractérisé en ce que** les nopes sont placées comme un motif de nid d'abeilles.

21. Réservoir selon l'une des revendications 13 à 20, **caractérisé en ce que** les nopes sont respectivement de même grandeur.

22. Réservoir selon l'une des revendications 13 à 20, **caractérisé en ce que** la feuille de métal à nopes est fabriquée à partir d'une feuille d'aluminium d'une épaisseur entre 0,15 et 0,25 mm, de préférence entre 0,18 et 0,22 millimètre.

23. Réservoir selon l'une des revendications 13 à 22, **caractérisé en ce que** la longueur d'arête de la surface de base est entre 3 et 10 mm, de préférence entre 4,5 et 8,5 et de manière tout particulièrement préférée entre 5,5 et 7,5 mm.

24. Réservoir selon l'une des revendications 13 à 23, **caractérisé en ce que** la hauteur des nopes est entre 0,6 et 1,5 mm, de préférence entre 0,8 et 1,2 mm.

25. Réservoir selon l'une des revendications 13 à 24, **caractérisé en ce que** la feuille de métal a un poids spécifique entre 0,62 et 0,78 kg/m², de préférence entre 0,67 et 0,73 kg/m².
